# EUROPÄISCHE PATENTSCHRIFT

(11) **EP 3 426 107 B1**
(45) Veröffentlichungstag und Bekanntmachung des Hinweises auf die Patenterteilung: **28.04.2021**
(21) Anmeldenummer: 17708841.6
(22) Anmeldetag: 09.03.2017
(51) Int. Cl.: A47J 31/44, A47J 31/46

(54) **KAFFEEMASCHINE**
COFFEE MACHINE
CAFETIÈRE AUTOMATIQUE

(30) Priorität: 11.03.2016 CH 3212016
(43) Veröffentlichungstag der Anmeldung: 16.01.2019
(73) Patentinhaber: Schaerer AG, 4528 Zuchwil (CH)
(72) Erfinder: SINZIG, Peter, 3302 Moosseedorf (CH); AEBERHARD, Bruno, 4528 Zuchwil (CH); LIENHARD, Andy, 4552 Derendingen (CH); KISSLING, Franco, 4500 Solothurn (CH); PINTO DA COSTA, Miguel Alexandre, 4588 Oberramsern (CH)
(74) Vertreter: IPrime Rentsch Kaelin AG
(86) Internationale Anmeldenummer: PCT/EP2017/055556
(87) Internationale Veröffentlichungsnummer: WO 2017/153529

(56) Entgegenhaltungen:
- EP-A1- 0 761 150
- EP-A1- 2 080 457
- EP-A1- 2 896 332
- WO-A1-2012/121598
- CH-A5- 682 798
- US-A1- 2014 123 860

## Beschreibung

### Gebiet der Technik

Die vorliegende Erfindung bezieht sich auf das Gebiet der Getränkezubereitung. Sie betrifft eine Kaffeemaschine gemäss dem Oberbegriff des Anspruchs 1.

### Technologischer Hintergrund

Bei Kaffeemaschinen der eingangs genannten Art ist es bekannt, einen Auslauf höhenverstellbar direkt aussen am Gehäuse vor oder unter der Frontblende platziert zu befestigen. Bei dieser Ausgestaltung ist der Verstellweg aber entweder durch die Frontblende selbst oder durch Bedienelemente auf der Frontblende begrenzt, so dass dieser Auslauf bisher nur einen Höhenunterschied zwischen einer Tasse und kleineren Kännchen oder Kannen ausgleichen konnte. Für die Befüllung von Glaskannen oder gar grossen Thermoskannen musste nach wie vor ein weiterer, höher positionierter Auslauf vorgesehen sein.

Die Druckschrift EP 1 199 016 A1 schlägt nun vor, durch eine höhenverstellbare Frontblende auf konstruktiv einfache Weise einen wesentlich grösseren Höhenverstellbereich für einen im Bereich der Frontblende angeordneten Auslauf zu realisieren und Funktionsteile wie z.B. Zuführschläuche hinter der Frontblende verschwinden zu lassen, ohne das Erscheinungsbild der Bedienfläche zu stören.

Eine solche höhenverstellbare Frontblende ist damit im Stand der Technik nur dafür vorgesehen, im Zusammenwirken mit der Auslasseinheit bzw. dem Auslauf einen grösseren Verstellbereich für diesen zu realisieren.

Es ist jedoch auch denkbar, die Höhenverstellbarkeit der Frontblende mit ihren Bedienungs- und Anzeigeelementen dazu zu benutzen, um Zugang zu im Normalbetrieb verdeckten Zugriffsmöglichkeiten zu erlauben. Insbesondere lässt sich auf diese Weise eine Zugriffsmöglichkeit zu Servicezwecken verwirklichen, die auf einfache Weise einem dazu autorisierten Personal vorbehalten werden kann.

EP 2896332 A1 zeigt eine Vorrichtung, die mit einer Dampfabgabedüse einer Kaffeemaschine zur Herstellung eines Getränks auf Milchbasis verbunden werden kann, umfassend einen Milchbehälter, der mit einem Deckel ausgestattet ist, in den ein Mischvorrichtung eingebaut ist, mit einer Mischkammer, einem Kanal zum Einströmen von Dampf in die Mischkammer, einem Kanal zum Einströmen von Milch in die Mischkammer, einem Kanal für das Einströmen von Luft in die Mischkammer und einen Kanal zum Ausgeben des in der Mischkammer erzeugten Getränks. Der Luftzuflusskanal, der Milchzuflusskanal, der Dampfzuflusskanal und der Abgabekanal bestehen aus einem aus einem Stück elastisch verformbaren Gummis.

### Darstellung der Erfindung

Aufgabe der Erfindung ist es unter anderem, eine Kaffeemaschine der eingangs genannten Art zur Verfügung zu stellen, der die oben erwähnten und anderen Nachteile nicht aufweist. Insbesondere soll eine solche Kaffeemaschine der eingangs genannten Art eine vereinfachte Reinigung ermöglichen.

Diese und andere Aufgaben werden gelöst durch eine erfindungsgemässe Kaffeemaschine gemäss dem unabhängigen Anspruch 1 und dem unabhängigen Anspruch 5. Weitere bevorzugte Ausführungsformen sind in den abhängigen Ansprüchen gegeben.

Ein Aspekt der Erfindung betrifft eine Kaffeemaschine zum automatischen Zubereiten eines Kaffeegetränks und gegebenenfalls weiterer Getränke umfasst ein Gehäuse, in welchem die zur Zubereitung des Kaffeegetränks notwendigen technischen Mittel wie z.B. Mahlwerk, Brüheinrichtung, Boiler, untergebracht sind, und eine Auslasseinheit, über welche das gewünschte Getränk, gegebenenfalls zusammen mit aromatisierenden oder anderen Zusätzen, ausgegeben wird. In der Auslasseinheit ist eine Auslassanordnung vorgesehen, in welcher nebeneinander eine Mehrzahl von rohrförmigen Auslässen aus einem elastomeren Material, insbesondere Silikonkautschuk oder Gummi, angeordnet sind, in welche Leitungen für die Getränke und/oder Getränkezusätze münden, und welche zum einfachen Reinigen in der Auslasseinheit herausnehmbar gelagert sind. Bei einer solchen Kaffeemaschine ist es möglich, durch Flüssigkeitsreste gebildete stabile Krusten an den unteren Auslässen leicht zu entfernen, indem zum Reinigen die Auslässe verformt werden, so dass angesetzte Krusten abplatzen.

Die genannten Auslässe sind Teil einer zumindest teilweise aus einem elastomeren Material bestehenden, quer zur Auslassrichtung sich erstreckenden Auslassplatte.

Die Auslassplatte kann bei einer solchen Ausführungsform als eigenständiges Teil vollständig aus dem elastomeren Material bestehen und in der Auslasseinheit durch einen von unten aufsetzbaren und einrastbaren Halterahmen gehalten sein.

Alternativ kann die Auslassplatte als Verbundteil aus einem elastomeren Dichtungsteil und einem damit verbundenen formstabilen Rahmenteil aufgebaut sein und mittels des Rahmenteils in die Auslasseinheit einrastend einsetzbar sein.

Es wird weiter offenbart eine Kaffeemaschine zum automatischen Zubereiten eines Kaffeegetränks und gegebenenfalls weiterer Getränke, umfassend ein Gehäuse, in welchem die zur Zubereitung des Kaffeegetränks notwendigen technischen Mittel wie z.B. Mahlwerk, Brüheinrichtung, Boiler, untergebracht sind, eine an der Vorderseite des Gehäuses angeordnete Anzeige- und Bedieneinheit, über welche das gewünschte Kaffeegetränk eingegeben werden kann und an welcher Informationen über das jeweilige Kaffeegetränk und/oder den Betriebszustand der Maschine ausgegeben werden, eine unterhalb der Anzeige- und Bedieneinheit angeordnete Auslasseinheit, über welche das gewünschte Getränk, gegebenenfalls zusammen mit aromatisierenden oder anderen Zusätzen, ausgegeben wird, sowie auf der Oberseite des Gehäuses angeordnete Vorratsbehälter, in welchen Grundstoffe, insbesondere Kaffeebohnen, für die Zubereitung des Kaffeegetränks und gegebenenfalls weiterer Getränke, bereitgehalten werden. Die Anzeige- und Bedieneinheit ist zur Ermöglichung eines Zugangs zum Inneren der Maschine zwischen einer Normalposition und einer darüber liegenden Serviceposition in der Höhe verfahrbar ausgebildet.

Eine solche Kaffeemaschine schafft demnach einen gezielten Zugang zu ansonsten verdeckten Eingriffsmöglichkeiten, was die Reinigung der Kaffeemaschine erleichtert.

Eine Ausgestaltung dieser Kaffeemaschine ist dadurch gekennzeichnet, dass die Vorratsbehälter auf der Oberseite des Gehäuses abnehmbar aufgesetzt sind, dass die Vorratsbehälter im aufgesetzten Zustand verriegelbar sind, und dass hinter der Anzeige- und Bedieneinheit ein Betätigungsmechanismus angeordnet ist, mittels welchem die Vorratsbehälter im aufgesetzten Zustand ver- und entriegelbar sind, und welcher für die Betätigung zugänglich ist, wenn die Anzeige- und Bedieneinheit sich in der Serviceposition befindet.

Wenn also die mit der Maschine fest verriegelten Vorratsbehälter zum Befüllen und/oder Reinigen von der Maschine abgenommen werden sollen, wird die Anzeige- und Bedieneinheit nach oben in die Serviceposition verfahren, so dass ein dahinter angeordneter Betätigungsmechanismus zugänglich wird, mit dessen Hilfe die Vorratsbehälter vorzugsweise gemeinsam und gleichzeitig entriegelt werden können.

Wenn die Vorratsbehälter jeweils eine Ausgabeöffnung aufweisen, welche mittels eines Schiebers geöffnet und verschlossen werden kann, ist es von Vorteil, dass der Betätigungsmechanismus mit dem Verriegeln der aufgesetzten Vorratsbehälter gleichzeitig den jeweiligen Schieber öffnet und mit dem Entriegeln schliesst.

Das Schliessen der Behälter vor dem Abnehmen hat den Vorteil, dass keine noch in den Behältern befindlichen Inhalte nach dem Abnehmen der Behälter unkontrolliert austreten können.

Der Betätigungsmechanismus kann insbesondere einen verschwenkbaren Betätigungshebel aufweisen, welcher zwischen einer Verriegelungsposition, in welcher die Vorratsbehälter verriegelt sind, und einer Entriegelungsposition, in welcher die Vorratsbehälter entriegelt sind, verschwenkbar ist.

Hierdurch wird eine besonders einfache und störungssichere mechanische Ver- und Entriegelung möglich.

Eine andere Ausgestaltung der Kaffeemaschine ist dadurch gekennzeichnet, dass die Auslasseinheit in der Höhe verfahrbar ausgebildet ist und dass Mittel vorgesehen sind, welche ein gleichförmiges Verfahren der Auslasseinheit in der Höhe bewirken.

Derartige Mittel wirken dem Effekt entgegen, dass die Auslasseinheit aufgrund ihres Eigengewichtes leichter nach unten als nach oben verfahrbar ist, und erleichtern so die Bedienung der Maschine und die Einstellung einer gewählten Auslasshöhe.

Insbesondere kann dazu die Auslasseinheit mit dem freien Ende eines aufrollbaren Federbandes verbunden sein, welches aus einem aufgerollten Ruhezustand abgerollt wird, wenn die Auslasseinheit nach unten verfahren wird und sich wieder aufrollt, wenn die Auslasseinheit nach oben verfahren wird.

Eine solche Lösung für die Auslasseinheit ist nicht auf die vorliegende Kaffeemaschine beschränkt, sondern kann auch bei anderen Kaffeemaschinen mit Vorteil eingesetzt werden.

Eine wieder andere Ausgestaltung der erfindungsgemässen Kaffeemaschine ist dadurch gekennzeichnet, dass in der Auslasseinheit eine Auslassanordnung vorgesehen ist, in welcher nebeneinander eine Mehrzahl von rohrförmigen Auslässen aus einem elastomeren Material, insbesondere Silikonkautschuk oder Gummi, angeordnet sind, in welche Leitungen für die Getränke und/oder Getränkezusätze münden, und welche zum einfachen Reinigen in der Auslasseinheit herausnehmbar gelagert sind.

Die Auslässe schliessen dicht mit den Leitungen für die Heranführung der Getränke und/oder Getränkezusätze ab und bilden so Endstücke dieser Leitungen, an denen nach dem Einsatz möglicherweise Reste der Getränke und/oder Getränkezusätze haften bleiben und verkrusten können. Da die Auslässe aus elastomerem Material bestehen, lassen sie sich besonders leicht reinigen, wobei durch Verformung des Materials feste Krusten und Reste leicht abgesprengt werden können. Wenn die Auslässe aus der Auslasseinheit herausnehmbar sind, kann die Reinigung weiter vereinfacht und erleichtert werden.

So sind die Auslässe insbesondere Teil einer zumindest teilweise aus einem elastomeren Material bestehenden, quer zur Auslassrichtung sich erstreckenden Auslassplatte.

Die Auslassplatte kann insbesondere ein Formteil sein, in welchem die Auslässe angeformt sind.

Insbesondere kann die Auslassplatte als eigenständiges Teil vollständig aus dem elastomeren Material bestehen und in der Auslasseinheit durch einen von unten aufsetzbaren und einrastbaren Halterahmen gehalten werden.

Es ist aber auch denkbar, dass die Auslassplatte als Verbundteil aus einem elastomeren Dichtungsteil und einem damit verbundenen formstabilen Rahmenteil aufgebaut ist und mittels des Rahmenteils in die Auslasseinheit einrastend einsetzbar ist.

Hierdurch kann das Herausnehmen zum Reinigen und Wiedereinsetzen weiter vereinfacht werden.

Es versteht sich von selbst, dass diese Art der Auslasseinheit auch bei anderen Kaffeemaschinen, insbesondere solchen, die mit sirupartigen Aromazusätzen arbeiten, mit Vorteil eingesetzt werden kann.

Eine weitere Ausgestaltung der Kaffeemaschine ist dadurch gekennzeichnet, dass die Anzeige- und Bedieneinheit ein berührungsempfindliches Display zur Eingabe und Anzeige von Informationen umfasst, und dass ausserhalb, insbesondere unterhalb des Displays, eine elektronische Analoganzeige nach Art eines Zeigerinstruments angeordnet ist, welche den Brühdruck anzeigt.

Ein solches, einem mechanischen Manometer nachgebildetes elektronisches Manometer, bei dem Zeiger und Skala auf einem kreisrunden Display nachgebildet und dargestellt werden, gibt dem Benutzer der Kaffeemaschine den Eindruck und die Information, die er bei einer klassischen Espressomaschine hätte. Die Druckanzeige arbeitet mit einem elektronischen Drucksensor zusammen, der sich im Inneren der Maschine an geeigneter Stelle befindet.

Auch diese Art der "klassischen" Druckanzeige lässt sich ohne weiteres bei anderen Kaffeemaschinen einsetzen. Es ist auch denkbar, auf diese Weise eine analoge Temperaturanzeige zu realisieren und vorzusehen.

Eine andere Ausgestaltung der Kaffeemaschine ist dadurch gekennzeichnet, dass links und rechts von der Auslasseinheit ein Heisswasserauslass und eine Dampflanze nach unten herausstehend angeordnet sind, und dass dem Heisswasserauslass und der Dampflanze auf der Anzeige- und Bedieneinheit jeweils zur Aktivierung ein entsprechender Heisswasserknopf und Dampfknopf zugeordnet sind.

Durch eine entsprechende räumliche Zuordnung der Auslässe für Heisswasser und Dampf und der zugehörigen Bedienknöpfe lässt sich eine intuitive Bedienbarkeit der Maschine erreichen, die ohne spezielle Menüführung oder Beschriftung auskommen kann.

Eine noch andere Ausgestaltung der Kaffeemaschine ist dadurch gekennzeichnet, dass die Vorratsbehälter jeweils mit einem abschliessbaren Deckel ausgestattet sind, und dass wenigstens einer der Vorratsbehälter im Deckel einen Einwurfschlitz zum Einwerfen einer Reinigungstablette aufweist.

Durch die abschliessbaren Deckel wird verhindert, dass nicht autorisierte Personen Zugang zum Inneren der Behälter erlangen und beispielsweise die Vorratsbehälter falsch befüllen, verunreinigen oder dergleichen.

Eine weitere Ausgestaltung der Kaffeemaschine ist dadurch gekennzeichnet, dass die Vorratsbehälter jeweils einen ausklappbaren Standbügel aufweisen, der einen sicheren Stand des abgenommenen und gegebenenfalls gefüllten Vorratsbehälters ermöglicht. Hierdurch wird sicher verhindert, dass die abgenommenen Vorratsbehälter zur Seite umkippen und unbeabsichtigt ihren Inhalt nach aussen entleeren.

Eine weitere Servicefreundlichkeit lässt sich bei der Kaffeemaschine dadurch erreichen, dass das Gehäuse abnehmbare Seiten- und/oder Rückwände aufweist, welche am Gehäuse magnetisch gehalten werden.

Hierdurch ist es möglich, die Seiten- und/oder Rückwände zu Servicezwecken schnell und auf einfache Weise ohne Werkzeug abzunehmen und später wieder anzubringen.

### Kurze Beschreibung der Zeichnungen

Die Erfindung soll nachfolgend anhand von Ausführungsbeispielen im Zusammenhang mit den Zeichnungen näher erläutert werden. Die Zeichnungen zeigen lediglich Ausführungsbeispiele des Erfindungsgegenstands. Es zeigen:
- Figur 1: in einer Ansicht von vorne ein Ausführungsbeispiel einer Kaffeemaschine nach der Erfindung mit drei aufgesetzten Vorratsbehältern;
- Figur 2: in einer perspektivischen Ansicht die Kaffeemaschine aus Figur 1 mit einer abgenommenen Seitenwand;
- Figur 3a: in einer perspektivischen Ansicht einen der Vorratsbehälter mit einem im Deckel angebrachten Schlitzeinsatz und geöffnetem Schieber;
- Figur 3b: einen der Vorratsbehälter mit nach unten ausgeklapptem Standbügel;
- Figur 4: ein Ausführungsbeispiel einer (geöffneten) Auslasseinheit, in die eine elastomere Auslassplatte mit einer Mehrzahl von parallelen Auslässen einsetzbar ist;
- Figur 5: eine zu Figur 4 alternative Auslassplatte in Verbundform mit einem elastomeren Dichtungsteil und einem damit fest verbundenen Rahmenteil;
- Figur 6: Einzelheiten einer mit einem Federband arbeitenden Mechanik, die ein gleichmässiges Verfahren der Auslasseinheit bewirkt;
- Figur 7: in vergrösserter Darstellung ein Schlitzeinsatz für einen Vorratsbehälter;
- Figur 8: die bei abgenommener Bedien- und Anzeigeeinheit sichtbare Hebelmechanik für das Verriegeln und Entriegeln der Vorratsbehälter;
- Figur 9a: den Zugang zur Hebelmechanik bei hochgeschobener Bedien- und Anzeigeeinheit; und
- Figur 9b: die Parkposition der Hebelmechanik nach der Entriegelung.

### Wege zur Ausführung der Erfindung

Die im Folgenden gegebenen Beispiele dienen der besseren Veranschaulichung der Erfindung, sind jedoch nicht dazu geeignet, die Erfindung auf die hierin offenbarten Merkmale zu beschränken.

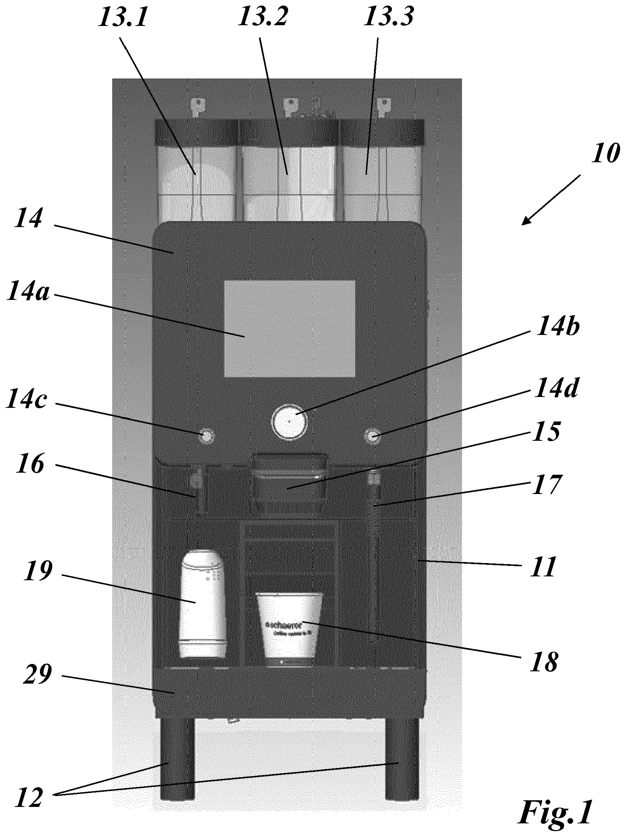

Figur 1 zeigt in einer Ansicht von vorne ein Ausführungsbeispiel einer Kaffeemaschine nach der Erfindung mit drei aufgesetzten Vorratsbehältern 13.1, 13.2 und 13.3. Die Kaffeemaschine 10 der Figur 1 weist ein Gehäuse 11 mit Füssen 12 auf, in welchem (in Figur 1 nicht sichtbar) die zur Zubereitung des Kaffeegetränks notwendigen technischen Mittel wie z.B. Mahlwerk, Brüheinrichtung, Boiler und gegebenenfalls auch interne Behälter mit Aromazusätzen, untergebracht sind.

An der Vorderseite des Gehäuses 11 ist eine rechteckige Anzeige- und Bedieneinheit 14 mit abgerundeten Ecken angeordnet, über welche das gewünschte Kaffeegetränk oder auch andere Getränke wie z.B. heisser Kakao, eingegeben werden können und an welcher Informationen über das jeweilige Kaffeegetränk (oder andere Getränk) und/oder den Betriebszustand der Maschine ausgegeben werden.

Die Anzeige- und Bedieneinheit 14 umfasst ein zentral angeordnetes, ebenfalls rechteckiges, berührungsempfindliches Display 14a zur Eingabe und Anzeige von Informationen innerhalb eines aufrufbaren Menüs. Unterhalb des Displays 14a ist mittig eine elektronische Analoganzeige 14b nach Art eines Zeigerinstruments angeordnet, die ein mechanisches Manometer mit Zeiger und Skala nachbildet und den in der Maschine elektronisch aufgenommenen Brühdruck anzeigt.

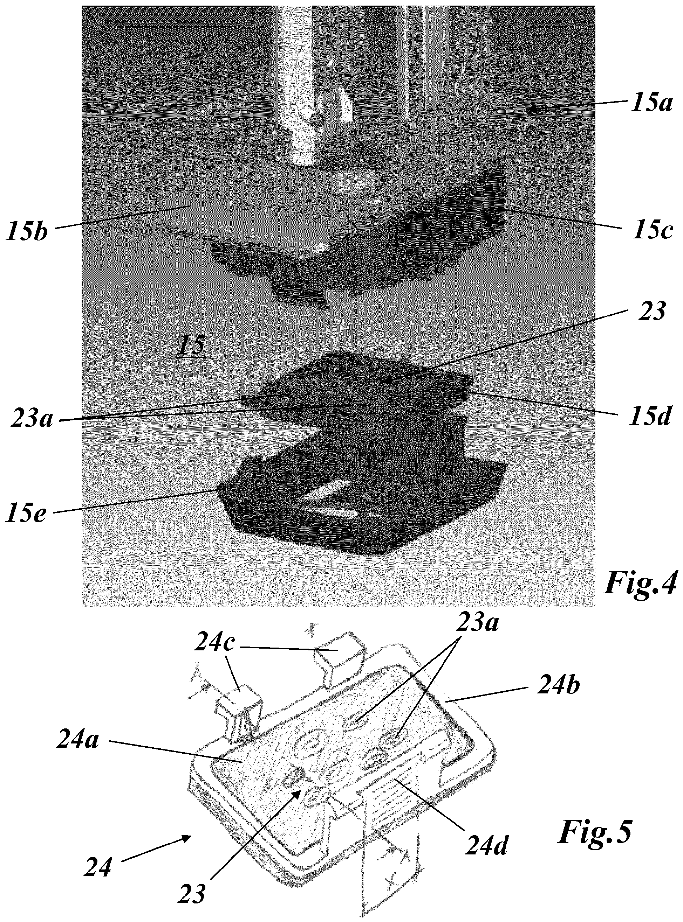

Unterhalb der Anzeige- und Bedieneinheit 14 ist eine Auslasseinheit 15 angeordnet, welche zur Bedienung eine Griffplatte (15b in Figur 4) aufweist und über welche das gewünschte Getränk, gegebenenfalls zusammen mit aromatisierenden oder anderen Zusätzen (z.B. Milch), ausgegeben wird. Die Auslasseinheit 15 hat einen speziellen inneren Aufbau und ist auf bestimmte Weise höhenverstellbar, was im weiteren Verlauf Im Zusammenhang mit den Figur 4, 5 und 6 noch näher beschrieben und erläutert wird.

Unterhalb der Auslasseinheit 15 ist eine Auffangschale 29 angeordnet, die mit einer Lochplatte oder einem Gitter abgedeckt ist, auf die ein Becher 18 oder dgl. zur Aufnahme des ausgegebenen Getränks gestellt werden kann. Weiterhin kann in dem räumlich zurückgesetzten Ausgabebereich der Maschine 10 eine von aussen einsetz- und austauschbare Kartusche 19 zur Wasserentkalkung vorgesehen sein.

Links und rechts von der Auslasseinheit 15 sind ein Heisswasserauslass 16 und eine Dampflanze 17 nach unten herausstehend und gerichtet angeordnet, die z.B. zur Teebereitung und zum Aufschäumen von Milch für die Zubereitung eines Cappuccinos oder dgl. vorgesehen sind. Dem Heisswasserauslass 16 und der Dampflanze 17 sind direkt darüber auf der Anzeige- und Bedieneinheit 14 jeweils zur Aktivierung ein entsprechender Heisswasserknopf 14c und Dampfknopf 14d zugeordnet. Durch diese direkte örtliche Zuordnung wird eine intuitive Bedienbarkeit der Maschine erleichtert.

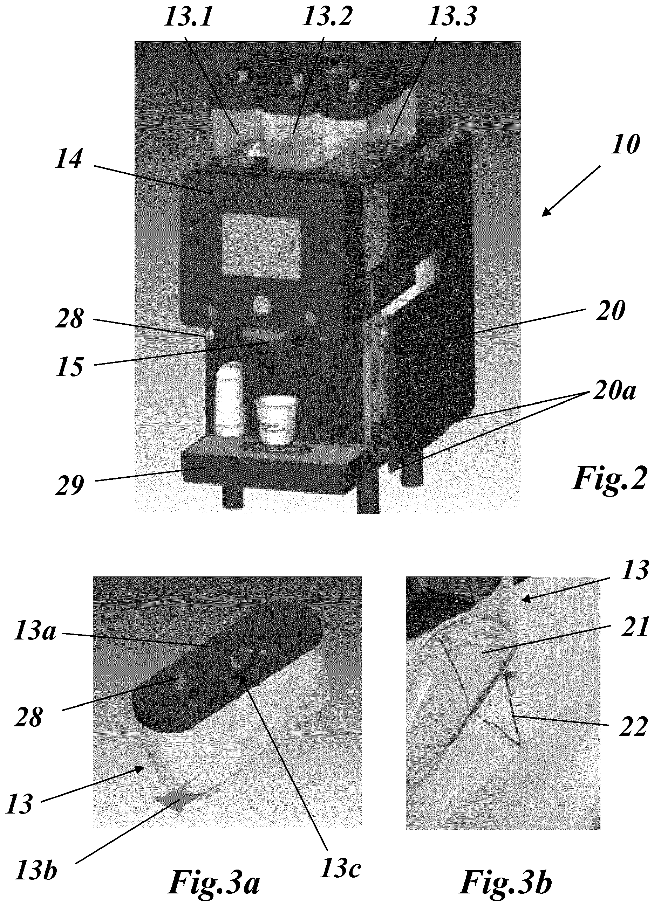

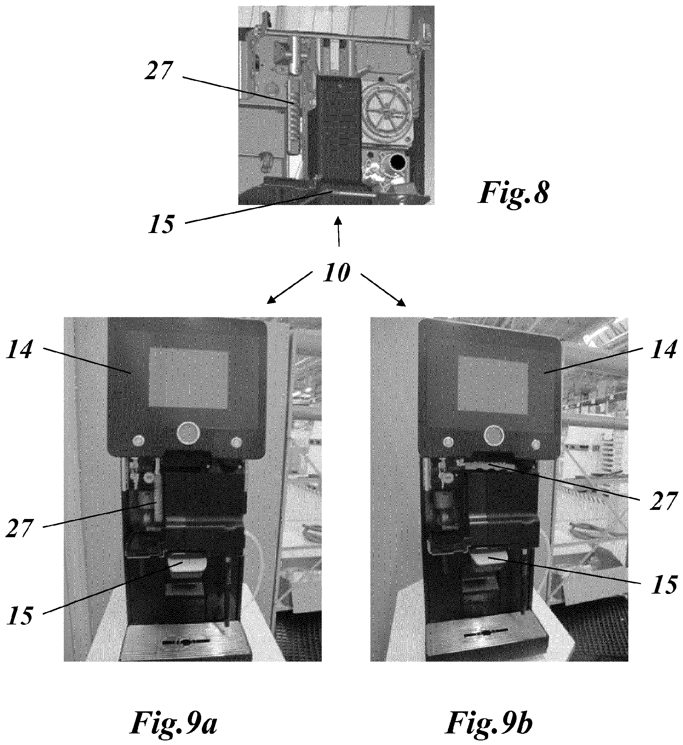

Wie den Figur 9a und 9b zu entnehmen ist, ist die Anzeige- und Bedieneinheit 14 zur Ermöglichung eines Zugangs zum Inneren der Maschine zwischen einer Normalposition (Figur 1, Figur 2) und einer darüber liegenden Serviceposition (Figur 9a, 9b) in der Höhe verfahrbar ausgebildet. Damit das Verfahren der Anzeige- und Bedieneinheit 14 nur autorisierten Personen möglich ist, ist die Anzeige- und Bedieneinheit 14 mit einem Schloss gesichert, dass mittels eines Schlüssels 28 betätigt werden kann (Figur 2).

Die auf der Oberseite des Gehäuses 11 angeordneten Vorratsbehälter 13.1, 13.2 und 13.3 enthalten für die Zubereitung des Kaffeegetränks und gegebenenfalls weiterer Getränke notwendigen Grundstoffe, insbesondere Kaffeebohnen. So kann beispielsweise der linke Vorratsbehälter 13.1 Kakaopulver für die Zubereitung eines Kakaogetränks enthalten, während die anderen Vorratsbehälter 13.2 und 13.3 verschieden Arten von Kaffeebohnen aufnehmen.

Die mittels entsprechender Schlüssel (28 in 3a) am Deckel verschliessbaren Vorratsbehälter 13 bzw. 13.1, 13.2 und 13.3 sind auf der Oberseite des Gehäuses 11 abnehmbar aufgesetzt und im aufgesetzten Zustand verriegelbar. Dazu ist hinter der Anzeige- und Bedieneinheit 14 ein Betätigungsmechanismus (27 in Figur 8 und 9a, 9b) angeordnet, mittels welchem die Vorratsbehälter 13 bzw. 13.1, 13.2 und 13.3 im aufgesetzten Zustand verriegelbar und entriegelbar sind, und welcher für die Betätigung nur zugänglich ist, wenn die Anzeige- und Bedieneinheit 14 sich in der in Figur 9a und 9b gezeigten (oberen) Serviceposition befindet.

Der Betätigungsmechanismus weist einen verschwenkbaren Betätigungshebel 27 auf, welcher zwischen einer Verriegelungsposition (Figur 8 und 9a), in welcher er senkrecht steht und in welcher die Vorratsbehälter 13 bzw. 13.1, 13.2 und 13.3 verriegelt sind, und einer Entriegelungsposition, in welcher er horizontal nach vorne vorsteht und in welcher die Vorratsbehälter 13 bzw. 13.1, 13.2 und 13.3 entriegelt sind, verschwenkbar ist. Da nach dem Entriegeln die in der oberen Serviceposition befindliche Anzeige- und Bedieneinheit 14 den Zugang zu den entriegelten (und gleichzeitig an ihrem Ausgang verschlossenen) Vorratsbehälter 13 bzw. 13.1, 13.2 und 13.3 zumindest behindert, der nach vorne in die Horizontale herausgeschwenkte Betätigungshebel 27 aber das Herunterfahren der Anzeige- und Bedieneinheit 14 verhindert, kann der Betätigungshebel 27 in der horizontalen Position gemäss Figur 9b um eine vertikale Achse zum Gehäuse 11 hin herangeschwenkt werden, um den Weg nach unten für die Anzeige- und Bedieneinheit 14 freizugeben. In der in Figur 9b dargestellten Situation kann die Anzeige- und Bedieneinheit 14 dann (bei entriegelten und verschlossenen Vorratsbehältern 13 bzw. 13.1, 13.2 und 13.3) wieder aus der Serviceposition nach untern verfahren werden (Figur 1 und 2), um dann den ungehinderten Zugang zu den Vorratsbehältern 13 bzw. 13.1, 13.2 und 13.3 zu ermöglichen.

Beim Aufsetzen und Verriegeln bzw. Öffnen der Vorratsbehälter 13 bzw. 13.1, 13.2 und 13.3 läuft der Vorgang genau in umgekehrter Reihenfolge.

Gemäss Figur 3a weisen die Vorratsbehälter 13 (bzw. 13.1, 13.2 und 13.3) jeweils auf der Unterseite bzw. im Boden eine Ausgabeöffnung auf, welche mittels eines Schiebers 13b geöffnet und verschlossen werden kann. Der Betätigungshebel 27 öffnet über den zugehörigen Mechanismus mit dem Verriegeln der aufgesetzten Vorratsbehälter 13 bzw. 13.1, 13.2 und 13.3 gleichzeitig den jeweiligen Schieber 13b und schliesst ihn gleichzeitig mit dem Entriegeln, so dass beim Abnehmen der Behälter kein Inhalt unbeabsichtigt austreten kann.

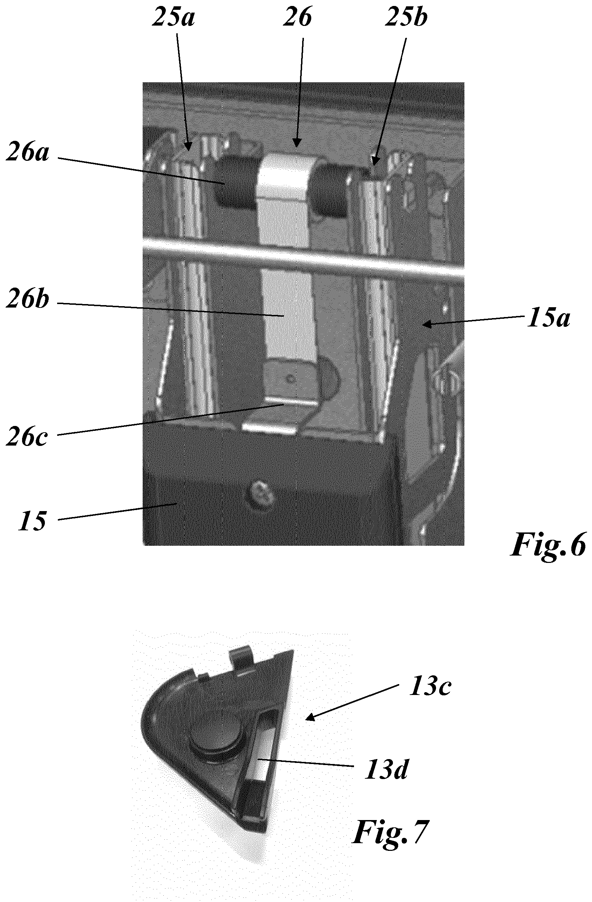

Die Vorratsbehälter 13 bzw. 13.1, 13.2 und 13.3 sind jeweils mit einem per Schlüssel 28 abschliessbaren Deckel 13a ausgestattet (Figur 3a). Wenigstens einer der Vorratsbehälter, im Ausführungsbeispiel der mittlere Vorratsbehälter 13.2, hat im Deckel 13a einen Schlitzeinsatz 13c (Figur 3a, Figur 7) mit einem Einwurfschlitz 13d zum Einwerfen einer Reinigungstablette, mit der die verschmutzenden Teile der Maschine gereinigt werden können.

Damit die Vorratsbehälter 13 bzw. 13.1, 13.2 und 13.3 im abgenommenen und gegebenenfalls gefüllten Zustand sicher abgestellt werden können, sind sie jeweils mit einem in Figur 3b gezeigten ausklappbaren Standbügel 22 ausgestattet, der in einem durch einen schräg ansteigenden Behälterboden 21 gebildeten Hohlraum unter dem Behälter untergebracht ist und aus einem stabilen Draht gebogen ist.

Wie bereits weiter oben erwähnt, ist die Auslasseinheit 15 der Kaffeemaschine 10 mittels einer Verschiebemechanik 15a (Figur 4, Figur 6) in der Höhe verfahrbar ausgebildet. Dabei sind spezielle Mittel in Form einer Federmechanik 26 vorgesehen, welche ein gleichförmiges, insbesondere kraftneutrales, Verfahren der Auslasseinheit 15 in der Höhe bewirken.

Dazu ist gemäss Figur 6 die Auslasseinheit 15 über ein abgewinkeltes Befestigungselement 26c mit dem freien Ende eines auf einem drehbar gelagerten Spulenkörper 26a aufrollbaren Federbandes 26b verbunden. Der Spulenkörper 26a ist quer zwischen zwei vertikalen Schienen 25a und 25b angeordnet, in denen die Auslasseinheit 15 beim Verfahren geführt wird. Das Federband 26b, das z.B. aus einem geeigneten Federstahl hergestellt ist, ist im Ruhezustand spiralförmig aufgerollt und baut eine Rückholkraft auf, wenn es abgerollt wird. Es wird aus dem aufgerollten Ruhezustand abgerollt, wenn die Auslasseinheit 15 nach unten verfahren wird und rollt sich wieder auf, wenn die Auslasseinheit 15 nach oben verfahren wird. Die Rückholkraft des abgerollten Federbandes 26b gleicht zumindest teilweise die Gewichtskäfte aus, die durch das Gewicht der Auslasseinheit 15 auf diese wirken, so dass ein weitgehend gleichförmiges Verfahren der Einheit möglich ist.

Im Inneren der Auslasseinheit 15 ist eine Auslassanordnung 23 (Figur 4 und Figur 5) vorgesehen, in welcher nebeneinander eine Mehrzahl von vertikal ausgerichteten rohrförmigen Auslässen 23a aus einem elastomeren Material, insbesondere Silikonkautschuk oder Gummi, angeordnet sind. Diese Auslässe 23a nehmen am oberen Ende die Enden der (nicht dargestellten) Ausgabeleitungen für die verschiedenen Getränke und Getränkezusätze auf und bilden am unteren Ende die eigentliche Auslassöffnung für die jeweiligen auszugebenden Flüssigkeiten.

Dies hat zur Folge, dass an den unteren Enden der Auslässe 23a mögliche Reste (Tropfen und dgl.) der ausgegebenen Flüssigkeiten hängen bleiben, sich absetzen und mit der Zeit eine stabile Kruste bilden können. Da die Auslässe 23a aus einem elastomeren Material sind, lassen sie sich zum Reinigen leicht verformen, so dass angesetzte Krusten abplatzen und leicht entfernt werden können. Damit die Reinigung einfach vorgenommen werden kann, sind die Auslässe 23a in der Auslasseinheit 15 herausnehmbar gelagert.

Hierbei sind zwei in den Figur 4 und 5 wiedergegebene Varianten möglich, bei denen die Auslässe 23a Teil einer zumindest teilweise aus einem elastomeren Material bestehenden, quer zur Auslassrichtung sich erstreckenden Auslassplatte 15d bzw. 24 sind:
In der einen Variante (Figur 4) besteht die Auslassplatte 15d als eigenständiges Teil vollständig aus dem elastomeren Material und wird in einem unterhalb der Griffplatte 15b angeordneten Auslassgehäuse 15c der Auslasseinheit 15 durch einen von unten aufsetzbaren und einrastbaren (stabilen) Halterahmen 15e gehalten.

In der anderen Variante (Figur 5) ist die Auslassplatte 24 als Verbundteil aus einem elastomeren Dichtungsteil 24a mit den Auslässen 23a und einem damit verbundenen formstabilen Rahmenteil 24b mit Einhängehaken 24c und einem gegenüberliegenden Rasthaken 24d aufgebaut und mittels des Rahmenteils 24b in die Auslasseinheit 15 einrastend einsetzbar. Durch das 2-Komponenten-Verbundteil 24 wird die Bedienung bzw. Reinigung der Maschine weiter vereinfacht.

Schliesslich kann die Bedienbarkeit und Wartung der Kaffeemaschine dadurch weiter vereinfacht und verbessert werden, dass gemäss Figur 2 das Gehäuse 11 abnehmbare Seiten- und/oder Rückwände 20 aufweist, welche am Gehäuse 11 magnetisch gehalten werden. Eine beispielhafte Seitenwand 20 weist dazu an der unteren Kante verteilt nach unten herausstehende Lagerzungen 20a auf, mit denen die Seitenwand in eine entsprechende Nut an dem Gehäuserahmen einsetzbar ist und dann magnetisch einrastend gegen den Gehäuserahmen verschwenkt werden kann.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen.

### Bezugszeichenliste

- 10: Kaffeemaschine (Kaffeeautomat)
- 11: Gehäuse
- 12: Fuss
- 13: Vorratsbehälter (z.B. Kaffeebohnenbehälter)
- 13.1-13.3: Vorratsbehälter (z.B. Kaffeebohnenbehälter)
- 13a: Deckel (abschliessbar)
- 13b: Schieber
- 13c: Schlitzeinsatz (f. Reinigungstablette)
- 13d: Einwurfschlitz
- 14: Anzeige- und Bedieneinheit
- 14a: Display
- 14b: Analoganzeige (z.B. Manometer)
- 14c: Heisswasserknopf
- 14d: Dampfknopf
- 15: Auslasseinheit (höhenverschiebbar)
- 15a: Verschiebemechanik
- 15b: Griffplatte
- 15c: Auslassgehäuse
- 15d: Auslassplatte (z.B. aus Gummi, Silikonkautschuk)
- 15e: Halterahmen (einrastbar)
- 16: Heisswasserauslass
- 17: Dampflanze
- 18: Becher
- 19: Kartusche (z.B. Entkalkung; austauschbar)
- 20: Seitenwand (abnehmbar)
- 20a: Lagerzunge
- 21: Behälterboden
- 22: Standbügel (ausklappbar)
- 23: Auslassanordnung
- 23a: Auslass (rohrförmig)
- 24: Auslassplatte (2K)
- 24a: Dichtungseinsatz (z.B. aus Gummi, Silikonkautschuk)
- 24b: Rahmenteil
- 24c: Einhängehaken
- 24d: Rasthaken
- 25a,b: Schiene
- 26: Federmechanik
- 26a: Spulenkörper
- 26b: Federband
- 26c: Befestigungselement
- 27: Betätigungshebel (Kaffeebehälter)
- 28: Schlüssel
- 29: Auffangschale

## Patentansprüche

1. Kaffeemaschine (10) zum automatischen Zubereiten eines Kaffeegetränks und gegebenenfalls weiterer Getränke, umfassend ein Gehäuse (11), in welchem die zur Zubereitung des Kaffeegetränks notwendigen technischen Mittel wie z.B. Mahlwerk, Brüheinrichtung, Boiler, untergebracht sind, und eine Auslasseinheit (15), über welche das gewünschte Getränk ausgegeben wird, wobei in der Auslasseinheit (15) eine Auslassanordnung (23) vorgesehen ist, in welcher nebeneinander eine Mehrzahl von rohrförmigen Auslässen (23a) aus einem elastomeren Material, insbesondere Silikonkautschuk oder Gummi, angeordnet sind, in welche Leitungen für die Getränke und/oder Getränkezusätze münden, und welche zum einfachen Reinigen in der Auslasseinheit (15) herausnehmbar gelagert sind, **dadurch gekennzeichnet, dass** die Auslässe (23a) Teil einer zumindest teilweise aus einem elastomeren Material bestehenden, quer zur Auslassrichtung sich erstreckenden Auslassplatte (15d; 24) sind.

2. Kaffeemaschine nach Anspruch 1, wobei über die Auslasseinheit (15) das gewünschte Getränk zusammen mit aromatisierenden oder anderen Zusätzen, ausgegeben wird.

3. Kaffeemaschine nach Anspruch 1 oder 2, wobei die Auslassplatte (15d) als eigenständiges Teil vollständig aus dem elastomeren Material besteht und in der Auslasseinheit (15) durch einen von unten aufsetzbaren und einrastbaren Halterahmen (15e) gehalten wird.

4. Kaffeemaschine nach Anspruch 1 oder 2, wobei die Auslassplatte (24) als Verbundteil aus einem elastomeren Dichtungsteil (24a) und einem damit verbundenen formstabilen Rahmenteil (24b) aufgebaut ist und mittels des Rahmenteils (24b) in die Auslasseinheit (15) einrastend einsetzbar ist.

5. Kaffeemaschine nach einem der Ansprüche 1 bis 4, weiter umfassend eine an der Vorderseite des Gehäuses (11) angeordnete Anzeige- und Bedieneinheit (14), über welche das gewünschte Kaffeegetränk eingegeben werden kann und an welcher Informationen über das jeweilige Kaffeegetränk und/oder den Betriebszustand der Maschine ausgegeben werden, sowie auf der Oberseite des Gehäuses (11) angeordnete Vorratsbehälter (13; 13.1, 13.2, 13.3), in welchen Grundstoffe, insbesondere Kaffeebohnen, für die Zubereitung des Kaffeegetränks und gegebenenfalls weiterer Getränke, bereitgehalten werden, wobei die Anzeige- und Bedieneinheit (14) zur Ermöglichung eines Zugangs zum Inneren der Maschine zwischen einer Normalposition und einer darüber liegenden Serviceposition in der Höhe verfahrbar ausgebildet ist, und wobei die Auslasseinheit (15) unterhalb der Anzeige- und Bedieneinheit (14) angeordnet ist.

## Claims

1. Coffee machine (10) for the automatic preparation of a coffee beverage and possibly further beverages, comprising a housing (11), in which the technical means necessary for preparing the coffee beverage, such as for example grinding mechanism, brewing device, boiler, are accommodated, and an outlet unit (15), via which the desired beverage is dispensed, wherein, in the outlet unit (15), there is provided an outlet arrangement (23) in which a multiplicity of tubular outlets (23a) composed of an elastomer material, in particular silicone rubber or rubber, are arranged adjacent to one another, into which lines for the beverages and/or beverage additives discharge, and which outlets are mounted removably in the outlet unit (15) for the purposes of easy cleaning, **characterized in that** the outlets (23a) are part of an outlet plate (15d; 24) that is at least partially composed of an elastomer material and that extends transversely with respect to the outlet direction.

2. Coffee machine according to Claim 1, wherein the desired beverage, together with flavouring or other additives, is dispensed via the outlet unit (15).

3. Coffee machine according to Claim 1 or 2, wherein the outlet plate (15d) is, as an independent part, composed entirely of the elastomer material and is held in the outlet unit (15) by means of a holding frame (15e) which can be mounted and latched in from below.

4. Coffee machine according to Claim 1 or 2, wherein the outlet plate (24) is constructed as a composite part from an elastomer seal part (24a) and from a dimensionally stable frame part (24b) connected to said seal part, and is, by way of the frame part (24b), insertable with latching-in action into the outlet unit (15).

5. Coffee machine according to one of Claims 1 to 4, further comprising a readout and operating unit (14) arranged on the front side of the housing (11), by means of which the desired coffee beverage can be input and on which information regarding the respective coffee beverage and/or the operating state of the machine is output, as well as storage containers (13; 13.1, 13.2, 13.3) arranged on the top side of the housing (11), in which raw materials, in particular coffee beans, for the preparation of the coffee beverage and possibly further beverages, are held ready, wherein, in order to allow access to the interior of the machine, the readout and operating unit (14) is designed to be movable in terms of height between a normal position and a service position situated above said normal position, and wherein the outlet unit (15) is arranged below the readout and operator control unit (14).

## Revendications

1. Machine à café (10) pour la préparation automatique d'une boisson au café et le cas échéant d'autres boissons, comprenant un carter (11) dans lequel sont logés les moyens techniques nécessaires à la préparation de la boisson au café, par exemple le moulin, le système de percolation, la bouilloire, et comprenant également une unité de sortie (15) via laquelle la boisson souhaitée est sortie, un dispositif de sortie (23) étant prévu dans l'unité de sortie (15) dans lequel une pluralité de sorties (23a) en forme de tube composées d'un matériau élastomère, notamment d'un caoutchouc siliconé ou d'un caoutchouc, sont disposées côte à côte et dans lequel des conduits prévus pour les boissons et/ou les additifs de boisson débouchent, et dans lequel la pluralité de sorties sont disposés de façon amovible dans l'unité de sortie (15) afin de permettre un nettoyage simple, **caractérisée en ce que** les sorties (23a) font partie d'une plaque de sortie (15d ; 24) au moins en partie composée d'un matériau élastomère s'étendant transversalement à la direction de sortie.

2. Machine à café selon la revendication 1, dans laquelle la boisson souhaitée est sortie par le biais de l'unité de sortie (15), conjointement avec des additifs aromatisants ou autres.

3. Machine à café selon la revendication 1 ou 2, dans laquelle la plaque de sortie (15d) se compose en totalité d'un matériau élastomère prenant la forme d'une partie autonome et est maintenue dans l'unité de sortie (15) par un cadre de maintien (15e) pouvant être mis en place et encliqueté par en bas.

4. Machine à café selon la revendication 1 ou 2, dans laquelle la plaque de sortie (24) peut être insérée par encastrement sous la forme d'une partie de liaison composée d'une partie d'étanchéité en élastomère (24a) et d'une partie d'encadrement (24b) de forme stable reliée à elle et encastrée dans l'unité de sortie (15) à l'aide de la partie d'encadrement (24b).

5. Machine à café selon l'une quelconque des revendications 1 à 4, comprenant en outre une unité d'affichage et de commande (14) disposée au niveau du côté avant du carter (11) via laquelle la boisson au café souhaitée peut être sélectionnée et au niveau de laquelle des informations sur la boisson au café respective et/ou l'état de fonctionnement de la machine sont envoyés, ainsi que des bacs de réserve (13; 13.1, 13.2, 13.3) disposés sur le côté supérieur du carter (11) dans lesquels les différentes matières premières, notamment les grains de café, sont tenus à disposition pour la préparation de la boisson au café et le cas échéant d'autres boissons, l'unité d'affichage et de commande (14) étant réalisée de façon à pouvoir être déplacée en hauteur entre une position normale et une position d'entretien plus haute afin de donner accès à l'intérieur de la machine, et l'unité de sortie (15) étant disposée en dessous de l'unité d'affichage et de commande (14).
